# EUROPÄISCHE PATENTSCHRIFT

(11) **EP 3 819 513 B1**
(45) Veröffentlichungstag und Bekanntmachung des Hinweises auf die Patenterteilung: **03.05.2023**
(21) Anmeldenummer: 20201747.1
(22) Anmeldetag: 14.10.2020
(51) Int. Cl.: F16C 29/02, F16C 29/12, B60N 2/75, A47B 88/40, A47C 1/03

(54) **GEITLAGER, AUSSTATTUNGSVORRICHTUNG MIT WENIGSTENS EINEM GLEITLAGER UND AUSSTATTUNGSVORRICHTUNG MIT WENIGSTENS EINEM DREHBAREN AUFGENOMMENEN LAGER**
SLIDING BEARING, EQUIPMENT DEVICE WITH AT LEAST ONE SLIDING BEARING AND FEATURE WITH AT LEAST ONE ROTATABLE MOUNTED BEARING
PALIER LISSE, DISPOSITIF D'ÉQUIPEMENT POURVU D'AU MOINS UN PALIER LISSE ET DISPOSITIF D'ÉQUIPEMENT POURVU D'AU MOINS UN PALIER LOGÉ ROTATIF

(30) Priorität: 08.11.2019 DE 102019130253
(43) Veröffentlichungstag der Anmeldung: 12.05.2021
(73) Patentinhaber: GRAMMER AG, 92289 Ursensollen (DE)
(72) Erfinder: Nuss, Ralph, 92284 Poppenricht (DE)
(74) Vertreter: Roche, von Westernhagen & Ehresmann

(56) Entgegenhaltungen:
- CH-A5- 663 373
- DE-A1-102010 036 000
- DE-A1-102017 117 847
- FR-A5- 2 207 550
- US-A1- 2017 259 714

## Beschreibung

Die Erfindung betrifft gemäß einem ersten Aspekt ein Gleitlager.

Ein solches Gleitlager ist bekannt aus offenkundiger Vorbenutzung. Z.B. weist das Gleitlager ein erstes Lagerelement und ein dem ersten Lagerelement gegenüberliegendes zweites Lagerelement auf. Zwischen den beiden Lagerelementen ist z.B. ein Steg des zu führenden Schiebeteils, wie z.B. eine Armauflage einer Armlehne, translatorisch bewegbar geführt. Um die Bewegbarkeit und eine einfache Montage zu gewährleisten, war ein Spiel zwischen dem ersten Lagerelement und dem zweiten Lagerelement ausgebildet. Das hatte zur Folge, dass sich das Ausstattungsteil im Rahmen des Spiels zwischen der Anlage an das erste Lagerelement und der Anlage an das gegenüberliegende zweite Lagerelement bewegen konnte, wobei unerwünschte Geräusche entstanden. Darüber hinaus nahm der Benutzer das Spiel bei der Bewegung des Ausstattungsteils haptisch wahr.

Aus FR 2 207 550 A5 ist ein Führungslager bekannt, welches ein festes Teil und ein dazu verschiebbares Teil umfasst. Gemäß einer Ausführung belasten gegenüber angeordnete federbelastete Gleitbacken das verschiebbare Teil in einen Gleichgewichtszustand. Alternativ wird das verschiebbare Teil von der federbelasteten Gleitbacke in Anlage an einer Führungswand gehalten.

Die CH 663373 A5 betrifft eine Führungsvorrichtung für einen verschiebbaren Gleitschlitten. Dieser ist mit Gleitlagern aus Kunststoff in einer Führung gelagert und wird von Federn bezüglich wenigstens einer Richtung quer zur Gleitrichtung in Anlage mit den Führungswänden der Führung belastet.

Gemäß der Fig. 5 und 6 der DE 10 2017 117 847 A1 sind an den Führungslagern Schrägflächen vorgesehen, welche die Aufnahme der Elemente des Sitzrahmens erleichtern.

Die US 2017 / 0259714 A1 betrifft eine Führungsvorrichtung einer Mittelkonsole mit einer verschiebbaren Armauflage. Die Führungsvorrichtung umfasst fahrzeugfest angeordnete gegenüberliegende Führungsschienen sowie mit der Armauflage verbundene in den Schienen gleitende Führungsstrukturen.

Die DE 10 2010 036 000 A1 betrifft eine Vorrichtung zur Verwendung im Interieur eines Fahrzeugs. Die Vorrichtung umfasst zwei Trägerelemente. Das erste Trägerelement weist zwei sich linear erstreckende erste Führungsflächen und das zweite Trägerelement zwei erste Anlageflächen. Die Trägerelemente sind unter einem Gleiten der Anlageflächen an den Führungsflächen relativ zueinander verschiebbar. Mittels einer Klemmung wird ein unbeabsichtigtes Gleiten verhindert. Mittels einer zweiten Führungsfläche und einer zweiten Anlagefläche wird bei montiertem ersten und zweiten Trägerelement eine elastische Verformung erreicht, wodurch die ersten und zweiten Anlageflächen auf die ersten und zweiten Führungsflächen gepresst werden.

Es war Aufgabe der Erfindung, ein Gleitlager zu schaffen, welches eine leichte Bewegbarkeit des Ausstattungsteils gewährleistet, aber ein Spiel weitgehend vermeidet. Darüber hinaus sollte ein Winkelversatz oder eine Winkeländerung eines bewegbaren Schiebeteils mittels des Gleitlagers ausgeglichen werden können.

Die Aufgabe wurde gelöst durch ein Gleitlager mit den Merkmalen des Anspruchs 1.

Das Gleitlager weist eine erste Führungsfläche auf, die mit einer ersten Gleitfläche des verschiebbaren Schiebeteils zusammenwirkt und weist eine zweite Führungsfläche auf, die mit einer zweiten Gleitfläche des Schiebeteils zusammenwirkt, wobei die erste Führungsfläche und die zweite Führungsfläche gegenüberliegend angeordnet sind. Das zweite Teil, welchem die zweite Führungsfläche zugeordnet ist, ist relativ zu dem ersten Teil, welchem die erste Führungsfläche zugeordnet ist, innerhalb eines Spielraums bewegbar ausgebildet. Das zweite Teil wird von einer Andruckvorrichtung, z.B. einer Feder, derart in Richtung der ersten Führungsfläche gepresst, dass die erste Führungsfläche mit der ersten Gleitfläche und zweite Führungsfläche mit der zweiten Gleitfläche in Kontakt stehen. Die Andruckkraft der Andruckvorrichtung kann entsprechend den Anforderungen ausgewählt werden. Die Gleitflächen sind z. B. an einem sich linear erstreckenden Steg ausgebildet. Der Steg wird z. B. zwischen den Führungsflächen aufgenommen und steht ständig in Kontakt mit den Führungsflächen.

Der Vorteil der Erfindung besteht darin, dass eine unerwünschte Geräuschentwicklung durch ein Spiel des Schiebeteils zwischen den Führungsflächen gegenüberliegender Lagerelemente vermieden wird. D.h. dass mittels des erfindungsgemäßen Gleitlagers sowohl das Spiel zwischen dem Schiebeteil und der ersten Führungsfläche, als auch das Spiel zwischen dem Schiebeteil und der zweiten Führungsfläche vermieden wird. Darüber hinaus erscheint die Lagerung des Schiebeteils unter haptischen Aspekten insgesamt hochwertiger, da der Benutzer bei der Bewegung kein Spiel des Schiebeteils in Form eines Wackelns des Schiebeteils wahrnimmt.

Wenigstens eine Führungsfläche zur Führung einer Gleitfläche ist z.B. eben oder gebogen ausgebildet. D.h., die Kontaktfläche zwischen der Gleitfläche und der Führungsfläche kann von einer ebenen Fläche gebildet sein oder auch von einer gebogenen Fläche gebildet sein. Die zusammenwirkenden Flächen können großflächig oder auch nur mit einer geringen Fläche in Kontakt stehen. Wenn die Führungsfläche gebogen ausgebildet ist, kann sie z.B. konvex oder konkav gebogen sein. Bei einer konvexen Krümmung kann eine Punktanlage oder eine Linienanlage mit der Gleitfläche vorliegen. Bei einer konkaven Krümmung ist z.B. eine flächige Anlage zu einer komplementären Form der Gleitfläche ausgebildet.

Die erste Führungsfläche und die zweite Führungsfläche sind z.B. parallel zueinander ausgebildet. In diesem Fall kann eine großflächige Führung des Schiebeteils gewährleistet werden. Auch kann auf diese Weise eine Linienanlage sowohl der ersten Führungsfläche, als auch der zweiten Führungsfläche an der jeweiligen Gleitfläche gewährleistet werden.

Das zweite Teil kann z.B. unmittelbar oder mittelbar an dem ersten Teil gelagert sein. In diesem Fall ist das Gleitlager als Baugruppe montierbar, wobei die erste Führungsfläche und die zweite Führungsfläche bereits vorjustiert sein können. Das erleichtert die Montage an einer Vorrichtung mit einem Schiebeteil, da die Führungsflächen nicht mehr aufeinander abgestimmt werden müssen. Gemäß einer einfachen alternativen Ausführungsform könnte aber das zweite Teil auch an einem von dem ersten Teil separaten Teil gelagert sein.

Ein gesondertes Führungsteil ist mit dem ersten Teil verbunden, an welchem das zweite Teil bewegbar gelagert ist.

Das Führungsteil ist bewegbar mit dem ersten Teil verbunden.

Das Führungsteil ist z.B. relativ zu dem ersten Teil in dieselben Bewegungsrichtungen beweglich, wie das zweite Teil. Das Führungsteil ist z.B. linear bewegbar an dem ersten Teil geführt. Die Andruckvorrichtung belastet Lagerflächen des Führungsteils und des ersten Teils gegen mit den Lagerflächen zusammenwirkende Wandbereiche des Lagersitzes. Die Belastung des ersten Teils und des Führungsteils erfolgt z.B. in entgegengesetzte Richtungen. Z.B. belastet die Andruckvorrichtung die Führungsflächen des ersten Teils und des zweiten Teils in Kontakt mit dem Schiebeteil und belastet auch die Lagerflächen des Führungsteils und des ersten Teils gegen die mit den Lagerflächen zusammenwirkenden Wandbereiche des Lagersitzes. Diese Mehrteiligkeit und Relativbewegbarkeit der Komponenten des Lagers hat den Vorteil, dass nicht nur das Spiel zwischen dem Gleitlager und dem Schiebeteil beseitigt wird, sondern auch ein Spiel zwischen dem Gleitlager und dem Lagersitz verhindert wird.

Die Form der mit den Wandbereichen des Lagersitzes zusammenwirkenden Außenflächen des Gleitlagers ist für die Erfindung grundsätzlich nicht wesentlich. Das ist anders, wenn das Lager drehbar in seinem Lagersitz aufgenommen sein soll. In diesem Fall müssen die Außenflächen und die mit den Außenflächen zusammenwirkenden Gegenflächen des Lagersitzes eine Drehbarkeit ermöglichen. Darauf wird weiter unten eingegangen. Ansonsten können die Außenflächen und die Gegenflächen auf jede Weise zusammenwirken, um das Gleitlager in seinem Lagersitz zu halten. Mittels eines Formschlusses, kann das Gleitlager z.B. in seinem Sitz derart festgelegt werden, dass der Spielausgleich zwischen dem Gleitlager und dem Lagersitz möglich ist. Indem z.B. die Außenflächen des ersten Teils und des Führungsteils und die jeweiligen Gegenflächen eine konisch zulaufende Struktur bilden, kann eine Zentrierung des Lagers in der X-Z-Ebene (im Sinne dieser Anmeldung) erreicht werden.

Gemäß einer weiteren Ausführungsform weist das erste Teil oder das gesonderte Führungsteil erste Führungsmittel und das zweite Teil zweite Führungsmittel zur Führung der Bewegung des zweiten Teils relativ zu dem ersten Teil auf. Die einen Führungsmittel können z.B. von zylindrischen Stiften und die anderen Führungsmittel von Aussparungen gebildet sein, deren Wände Führungsflächen zur Führung der Stifte innerhalb des Bewegungsspielraums des zweiten Teils bereitstellen. Die Aussparungen können z.B. komplementär zu den Stiften ausgebildet sein. Die Stifte können einen beliebigen Querschnitt, wie z.B. rund, dreieckig, viereckig, polygon, aufweisen.

Alternativ können auch andere Führungen zur translatorischen Führung des zweiten Teils eingesetzt werden. Das zweite Teil ist damit relativ zu dem ersten Teil ohne die Gefahr einer Verklemmung geführt.

Z.B. weist das erste Teil oder das gesonderte Führungsteil erste Begrenzungsmittel und das zweite Teil zweite Begrenzungsmittel zur Bewegungsbegrenzung der Relativbewegung des zweiten Teils relativ zu dem ersten Teil auf. Die Begrenzungsmittel können z.B. von Anschlägen des zweiten Teils an dem ersten Teil oder an dem gesonderten Führungsteil gebildet sein und auf diese Weise den ersten Endbereich der Bewegung und den zweiten Endbereich der Bewegung des zweiten Teils festlegen. Auf diese Weise kann die Bewegung des zweiten Teils relativ zu dem ersten Teil oder relativ zu dem Führungsteil derart begrenzt werden, dass einerseits unter einer großen Last das zweite Teil lediglich eine geringe Bewegung entgegen der Kraft der Andruckvorrichtung durchführt und andererseits eine einfache Montage des Schiebeteils in dem Lager möglich ist, weil ein Mindest-Abstand zwischen den Führungsflächen ausgebildet ist und der Abstand zwischen den Führungsflächen bei der Montage des Schiebeteils nicht erheblich vergrößert zu werden braucht.

Dem Führungsteil können gemäß einer weiteren Ausführungsform die ersten Begrenzungsmittel und / oder die ersten Führungsmittel zugeordnet sein, welches an dem ersten Teil gelagert ist. Diese Ausführungsform erlaubt eine einfache Montage des Gleitlagers, weil zunächst das zweite Teil an dem Führungsteil montiert werden kann und die Baugruppe anschließend an dem ersten Teil montierbar ist.

Z.B. weist das erste Teil einen Lagersitz zur Aufnahme des Führungsteils auf. Der Lagersitz kann z.B. als Linearführung ausgebildet sein. Das Führungsteil und das erste Teil können z.B. zusammenwirkende Führungsmittel aufweisen, mit welchen das Führungsteil in entgegengesetzte Richtungen bewegbar an dem ersten Teil geführt wird. Erste Bewegungsbegrenzungsmittel, die dem ersten Teil zugeordnet sind und zweite Bewegungsbegrenzungsmittel, die dem Führungsteil zugeordnet sind, können z.B. ein Lösen der Teile verhindern. Ein Bewegungsbegrenzungsmittel kann z.B. von einem Arm mit einer Anschlagfläche und das andere Bewegungsbegrenzungsmittel von einer Gegenfläche gebildet sein, wobei Anschlagfläche und Gegenfläche derart zusammenwirken, dass eine Bewegung in Löserichtung aus dem Lagersitz heraus verhindert wird. Alternativ kann das andere Rastmittel auch von einer Wand gebildet sein, die von dem Vorsprung hintergriffen wird. An dieser Stelle können aber auch weitere alternative bewegbare Lagerungen des Führungsteils an dem ersten Teil, insbesondere Linearführungen, verwendet werden.

An dem ersten Teil und / oder an dem zweiten Teil kann benachbart der Führungsfläche wenigstens eine Fase ausgebildet sein, welche die Montage des Schiebeteils zwischen den Führungsflächen erleichtert. Um eine sichere Anlage der Führungsflächen zu gewährleisten, muss der Abstand zwischen der ersten Führungsfläche und der zweiten Führungsfläche in der Grundstellung des zweiten Teils, d.h., wenn sich kein Schiebeteil zwischen den Führungsflächen befindet, geringer sein als der Abstand der Gleitflächen. Mit anderen Worten, bei der Montage wird das zweite Teil etwas entgegen der Federkraft der Andrückvorrichtung bewegt, wodurch sich der Abstand zwischen den Führungsflächen vergrößert. Um bei der Montage des Schiebeteils die Bewegung der Gleitflächen zwischen die Führungsflächen zu erleichtern, ist die Fase vorgesehen, welche eine Kraft, die quer zu der Bewegungsrichtung des zweiten Teils gerichtet ist in eine Richtung umlenkt, die parallel dazu gerichtet ist.

Gemäß einer Ausführungsform ist wenigstens ein Bereich der Außenfläche des Gleitlagers kreiszylindrisch oder kugelförmig ausgebildet. Bei einer komplementären kreiszylindrischen oder komplementären kugelförmigen Aufnahme des Lagers in einem Lagersitz ist damit eine Drehbewegung des Gleitlagers in der Aufnahme möglich. Auf diese Weise kann z. B. ein Winkelversatz oder eine Winkeländerung des Schiebeteils ausgeglichen werden. Die drehbar gelagerten Außenflächen des Gleitlagers sind z. B. vom Drehmittelpunkt beabstandet angeordnet. Insgesamt weist das Lager z. B. eine zylindrische, insbesondere eine kreiszylindrische Form auf. Z. B. ist eine der Führungsflächen radial zu einer Längsmittelachse des Kreiszylinders bewegbar.

Gemäß einer anderen Ausgestaltung der Erfindung weist das Gleitlager in Bewegungsrichtung des Schiebeteils betrachtet, eine etwa C-förmige Gestalt mit einer Öffnung zur Aufnahme der Gleitflächen des Schiebeteils auf.

Das erste Teil, das zweite Teil und das Führungsteil können z.B. aus Gleitlagermaterialien, vorzugsweise Kunststoff, oder aus Materialien, die gleitmodifiziert sind, gefertigt sein. Alle geeigneten Werkstoffe kommen in Betracht.

Die Erfindung umfasst gemäß einem zweiten Aspekt auch ein Ausstattungsteil mit einer Gleitlagervorrichtung umfassend wenigstens ein Gleitlager, insbesondere zwei oder vier Gleitlager, wobei die Gleitlager nach dem ersten Aspekt der Erfindung ausgebildet sind. Auf diese Weise kann mittels der Gleitlager die Lagerung eines größeren Schiebeteils, wie z.B. einer Armauflage einer Armlehne relativ zu einem Basisteil der Armlehne, erfolgen, wobei z. B. die Lager jeweils spielfrei in ihrem Lagersitz aufgenommen sind und wobei das Ausstattungsteil spielfrei in dem Gleitlager geführt ist.

Z.B. kann eine Ausstattungsvorrichtung eines Fahrzeugs eine solche Gleitlagervorrichtung aufweisen. Die Ausstattungsvorrichtung umfasst eine Basis und ein relativ zu der Basis verschiebbares Schiebeteil. Das Schiebeteil ist an der Basis gleitgelagert. Zur Führung des Schiebeteils weist z.B. die Basis Stege auf, wobei jeder Steg in einem erfindungsgemäßen Gleitlager nach dem ersten Erfindungsaspekt in X-Richtung verschiebbar gelagert ist, wobei eine Bewegung in Z-Richtung und in Y-Richtung im Wesentlichen nicht möglich ist. Jedes Gleitlager ist in einem Lagersitz des Schiebeteils gehalten. Z.B. weist die Basis auf gegenüberliegenden Seiten wenigstens einen Steg auf und das Schiebeteil umfasst auf zwei gegenüberliegenden Seiten jeweils zwei Lagersitze, in welchem ein Gleitlager angeordnet ist, derart, dass ein Verschieben des Schiebeteils in zwei entgegengesetzte Richtungen möglich ist. Alternativ können auch die Stege an dem Schiebeteil und die Gleitlager an der Basis angeordnet sein, wobei die Ausstattungsvorrichtung ansonsten gleich ausgebildet ist. Auf diese Weise wird eine spielfreie Lagerung des Schiebeteils zwischen den Führungsflächen des Gleitlagers sowie z.B. zusätzlich auch eine spielfreie Aufnahme des Gleitlagers in dem Lagersitz erreicht.

Gemäß einem dritten Aspekt betrifft die Erfindung eine Ausstattungsvorrichtung, die grundsätzlich entsprechend dem zweiten Aspekt aufgebaut ist, wobei aber wenigstens ein Lager der Gleitlagervorrichtung bewegbar in dem Lagersitz aufgenommen ist und von jeder denkbaren Lagerart gebildet sein kann, insbesondere aber von dem erfindungsgemäßen Lager gemäß dem ersten Aspekt gebildet ist. Das ist z.B. möglich, wenn das Lager zumindest in einem Bereich eine kreiszylindrische oder kugelförmige Außenfläche und die Aufnahme eine komplementäre Fläche ausbildet, die wenigstens abschnittsweise kreiszylindrisch oder hohlkugelförmig ausgebildet ist. Der Lagersitz ist in der Basis oder alternativ in dem Schiebeteil ausgebildet. Der Vorteil besteht darin, dass auf diese Weise ein Winkelversatz oder Winkeländerungen in der Führung des Schiebeteils ausgeglichen werden können, wobei das Schiebeteil spielfrei in dem Lager gelagert ist. Insbesondere ist auch das Gleitlager spielfrei in dem Lagersitz gelagert.

Ausführungsbeispiele der Erfindung sind in der nachfolgenden Figurenbeschreibung, auch unter Bezugnahme auf die schematischen Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug auf ein Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

Weitere Vorteile ergeben sich anhand der Beschreibung eines in den Fig. schematisch beschriebenen Ausführungsbeispiels. Es zeigen:
Fig. 1 eine perspektivische Ansicht eines erfindungsgemäßen Gleitlagers von schräg vorne,
Fig. 2 eine perspektivische Ansicht des Gleitlagers gemäß Fig. 1 von schräg hinten,
Fig. 3 eine perspektivische Explosionsdarstellung des Gleitlagers von schräg vorn,
Fig. 4 eine perspektivische Explosionsdarstellung des Gleitlagers von schräg hinten,
Fig. 5 eine Frontansicht des Gleitlagers,
Fig. 6 eine Ansicht gemäß Ansichtspfeil A in Fig. 5,
Fig. 7 eine Schnittdarstellung gemäß Schnittlinie B - B in Fig. 5
Fig. 8 eine Schnittdarstellung gemäß Schnittlinie C - C in Fig. 6,
Fig. 9a Draufsicht auf eine Ausstattungsvorrichtung mit einem Schiebeteil, welches mit vier erfindungsgemäßen Gleitlagern linear bewegbar an einer Basis gelagert ist, wobei sich das Schiebeteil in einer ersten Position befindet,
Fig. 9b eine Draufsicht in Anlehnung an Fig. 9a, wobei sich das Schiebeteil in einer zweiten Position befindet, wobei die erste Position gestrichelt gezeigt ist,
Fig. 10 eine Schnittdarstellung gemäß Schnittlinie D - D in Fig. 9a, wobei von der Basis lediglich ein Führungssteg dargestellt ist,
Fig. 11, eine Schnittdarstellung gemäß Schnittlinie E - E in Fig. 10.
Fig. 12, eine Schnittdarstellung einer Ausstattungsvorrichtung gemäß Fig. 10, wobei das Lager um einen Mittelpunkt drehbar in dem Lagersitz angeordnet ist.

Das Gleitlager insgesamt ist in den Fig. mit dem Bezugszeichen 10 bezeichnet. Das Gleitlager 10 ist vorgesehen zur Lagerung und Führung eines verschiebbaren Teils, im Folgenden als Schiebeteil bezeichnet, relativ zu einer Basis einer Vorrichtung, wie z.B. einem Fahrzeugausstattungsteil.

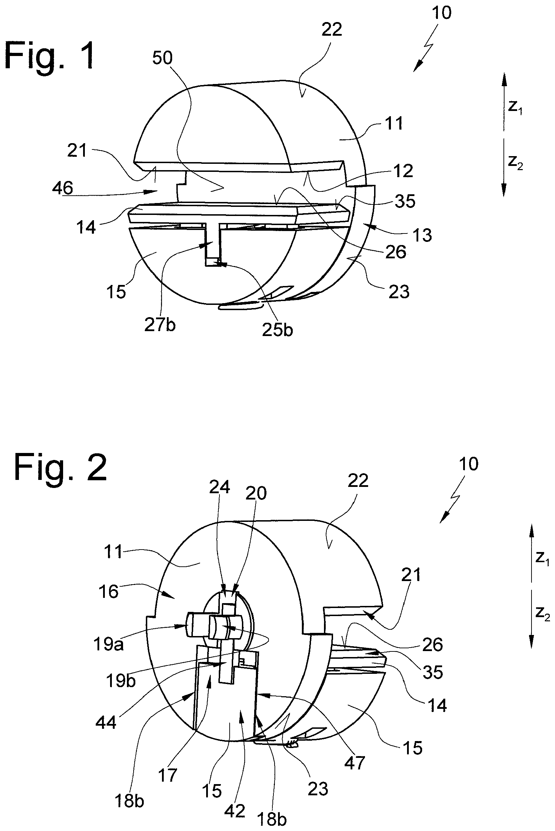

Das Gleitlager 10 umfasst ein erstes Teil 11 mit einer ersten Führungsfläche 12. Die Führungsfläche 12 ist eben und im vorliegenden Fall etwa rechteckig ausgebildet. Sie könnte alternativ aber auch eine andere Form aufweisen und / oder gebogen ausgebildet sein. Die Führungsfläche 12 erstreckt sich in Verschieberichtung x1 und x2 und rechtwinklig dazu in Richtung y1 und y2. Das erste Teil 11 ist z.B. in den Fig. 1 bis 4 zu erkennen. Es umfasst einen plattenförmigen Funktionsbereich 13, welcher der Befestigung des Gleitlagers 10 z.B. an einer Vorrichtung, z.B. an einem Fahrzeug-Ausstattungsteil, sowie der Führung und Lagerung eines zweiten Teils 14 dient, dessen Funktion weiter unten beschrieben ist. Der Funktionsbereich 13 erstreckt sich im Wesentlichen etwa rechtwinklig zu der Führungsfläche 12 in einer X-Z-Ebene.

Im vorliegenden Ausführungsbeispiel weist der Funktionsbereich 13 einen Lagersitz 17 (siehe Fig. 2) für ein Führungsteil 15 auf, das in die Richtungen z1 und z2 bewegbar an dem ersten Teil 11 befestigt geführt ist. Das Führungsteil 15 ist zur Lagerung und Führung des zweiten Teils 14 vorgesehen. Der Lagersitz 17 umfasst eine Aussparung 47 mit zwei an die Aussparung 47 angrenzenden, gegenüberliegenden Führungsstegen 18a und 18b, über welche das Führungsteil 15 in seinem Lagersitz 17 geführt werden kann. An einer Rückseite 16 des ersten Teils 11 sind Rastarme 19a und 19b ausgebildet, mit welchen das erste Teil 11 und damit das gesamte Gleitlager 10 an einer Vorrichtung befestigbar ist. Außerdem umfasst das erste Teil 11 eine Bewegungsbegrenzung 20 mit einer Schulter 24 zur unverlierbaren Halterung des Führungsteils 15 an dem ersten Teil 11.

Benachbart der Führungsfläche 12 ist eine Fase 21 ausgebildet. Diese erleichtert die Montage des Schiebeteils, das gleitgeführt werden soll.

Das erste Teil 11 ist zylindrisch ausgebildet und weist im vorliegenden Ausführungsbeispiel einen ersten Bereich 22 einer Außenfläche auf, der als Halbkreis mit einem ersten Radius ausgebildet ist und weist einen zweiten Bereich 23 der Außenfläche auf, der von einem Halbkreis mit einem zweiten Radius gebildet ist. Alternativ könnte die Außenfläche nicht Bereiche mit unterschiedlichen Radien, sondern vollständig kreisförmig mit einem Radius ausgebildet sein. Die Bereiche mit unterschiedlichen Radien haben hier lediglich den Zweck der Verhinderung eines falschen Einbaus.

Die Form der Außenfläche (hier 22 und 23) spielt lediglich in Anwendungen eine Rolle, in denen das Lager 10 für einen Toleranzausgleich zwischen Schiebeteil und Gleitlager 10 oder bei gewinkelten Führungen bewegbar in einem Lagersitz aufgenommen werden soll. Bei einem unbewegbaren Einbau des Gleitlagers in einem Lagersitz kann das Gleitlager auch andere Formen der Außenfläche, z.B. eine sechseckige Form und der Lagersitz eine komplementäre Form aufweisen. In diesem Fall wird das Gleitlager 10 von den Schrägflächen des Sechsecks in der X-Z-Ebene zentriert.

Das zweite Teil 14 ist hier in Form eines linear in die Richtungen z1 und z2 bewegbaren Gleitschuhs ausgebildet. Das zweite Teil 14 umfasst eine zweite Führungsfläche 26, die der ersten Führungsfläche 12 gegenüberliegend und parallel zu dieser angeordnet ist. Benachbart der Führungsfläche 26 ist eine Fase 35 ausgebildet, welche die Montage des zu führenden Schiebeteils erleichtert.

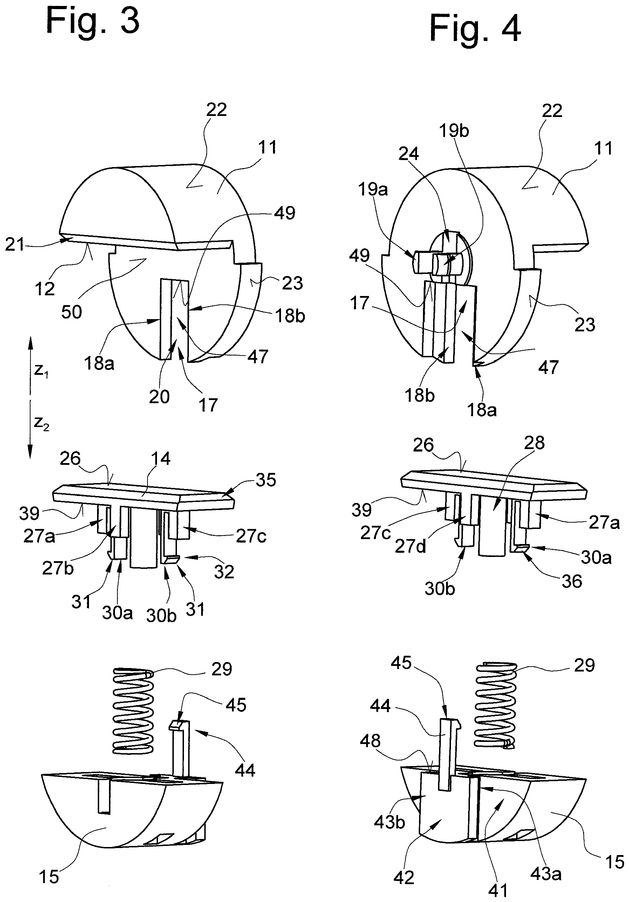

Ferner umfasst das zweite Teil 14 vier etwa rechtwinklig zur Führungsfläche 26 ausgebildete Führungsstifte 27a, 27b, 27c und 27d, die z.B. in den Fig. 3 und 4 erkennbar sind. Die Führungsstifte 27a, 27b, 27c und 27d sind im Querschnitt rechteckig ausgebildet, könnten alternativ aber auch eine andere Querschnittsform aufweisen, wie z.B. rund, dreieckig, viereckig, polygonal. Die Führungsstifte 27a, 27b, 27c und 27d sind im Abstand zueinander angeordnet.

Ein Lagerstift 28 ragt etwa rechtwinklig zu der Führungsfläche 26 vor und dient als Lagerung für eine Feder 29, welche das zweite Teil 14 in eine Richtung z1 derart belastet, dass die zweite Führungsfläche 26 in Kontakt mit dem zu lagernden Schiebeteil gedrückt wird. Damit belastet die Feder 29 ein zwischen den Führungsflächen 12 und 26 gelagertes Schiebeteil gegen die Führungsfläche 12.

Wegbegrenzer 30a, 30b sind an dem zweiten Teil 14 ausgebildet, die in Form von Stiften etwa rechtwinklig zu der Führungsfläche 26 vorragen. Die Wegbegrenzer 30a, 30b weisen an einem freien Endbereich 31 Hakenstrukturen 32 auf. Außerdem weisen die Wegbegrenzer 30a und 30b jeweils an dem freien Endbereich 31 eine Montageschräge 36 auf, welche der Erleichterung der Montage an dem Führungsteil 15 dient.

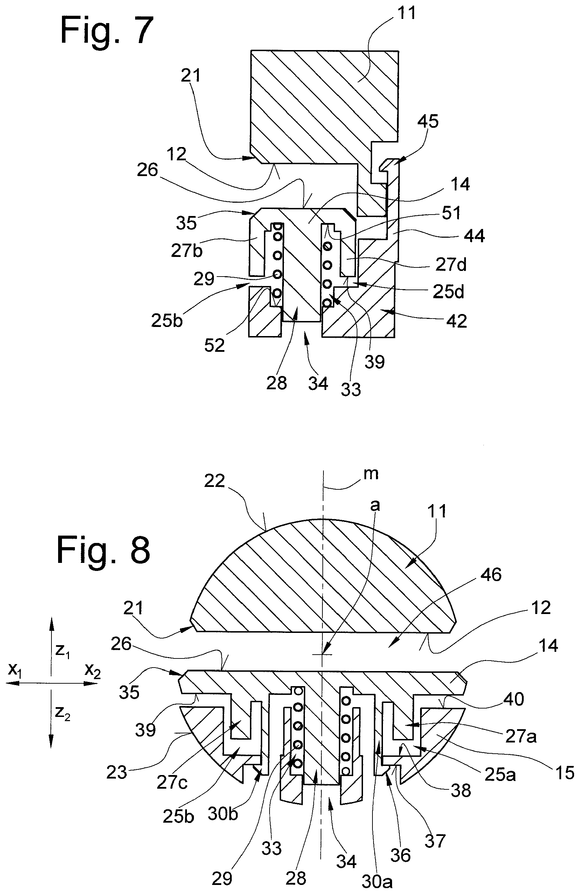

Das Führungsteil 15 umfasst für jeden Führungsstift 27a, 27b, 27c und 27d eine korrespondierende Aussparung 25a, 25b, 25c und 25d zur Führung des zweiten Teils 14 an dem Führungsteil 15. Wandungen der Aussparungen 25a, 25b, 25c und 25d wirken mit den Führungsstiften 27a, 27b, 27c und 27d zusammen und führen auf diese Weise das zweite Teil 14 bei seiner Bewegung zwischen einer ersten Endposition und einer zweiten Endposition derart, dass das Schiebeteil verkantungsfrei bewegbar ist. Außerdem umfasst das Führungsteil 15 einen Federsitz 33 (siehe z.B. die Fig. 7 und 8) und eine Führungsaussparung 34 zur Aufnahme des Lagerstiftes 28.

Auf einer Rückseite 41 umfasst das Führungsteil 15 einen Vorsprung 42 an welchem Führungsnuten 43a und 43b ausgebildet sind. Die Führungsnuten 43a und 43b sind parallel ausgebildet. An dem Vorsprung 42 ist ein Bewegungsbegrenzer 44 gehalten, welcher im vorliegenden Fall von einem Arm gebildet ist, der an einem freien Endbereich mit einer Hakenstruktur 45 mit Anschlagfläche versehen ist, die mit der Schulter 24 des ersten Teils derart zusammenwirkt, dass die Bewegung des Führungsteils 15 relativ zu dem ersten Teil 11 in die Richtungen z1 und z2 begrenzt ist. D.h., nach der Montage kann sich das Führungsteil 15 nicht mehr unbeabsichtigt von dem ersten Teil 11 lösen. Diese Bewegungsbegrenzung des Führungsteils 15 relativ zu dem ersten Teil 11 könnte alternativ auch weggelassen werden, da sie für die Erfindung keine wesentliche Bedeutung hat.

Die Montage des Gleitlagers 10 wird wie folgt unternommen. Zunächst wird das zweite Teil 14 an dem Führungsteil 15 montiert (siehe z.B. Fig. 8). Dazu wird die Feder 29 auf den Lagerstift 28 aufgesetzt und die Führungsstifte 27a, 27b, 27c und 27d werden in die entsprechenden Aussparungen 25a, 25b, 25c und 25d soweit eingeführt, bis die Montageschrägen 36 der Wegbegrenzer 30a, 30b mit einer Wand 38 des Führungsteils 15 in Kontakt geraten. Die freien Endbereiche 31a und 31b werden bei weiterem Druck in Richtung z2 in Richtung einer Mittelachse m des Gleitlagers 10 elastisch ausgelenkt und können auf diese Weise an der Wand 38 vorbeibewegt werden. Die Feder 29 stützt sich mit einem Endbereich an einer Anschlagfläche 52 des Federsitzes 33 und mit einem anderen Endbereich an einer Anschlagfläche 51 des zweiten Teils 14 derart ab, dass das zweite Teil 14 in Richtung z1 in eine erste Endposition belastet wird, in welcher die Hakenstrukturen 32 an einer Rückfläche 37 der Wand 38 anliegen (wenn kein Führungssteg zwischen der Führungsfläche 12 und der Führungsfläche 26 angeordnet ist). Aufgrund der Bewegungsbegrenzung wird ein Mindestabstand zwischen der Führungsfläche 12 und der Führungsfläche 26 eingehalten, welche die Montage von Führungsmitteln des Schiebeteils zwischen den Führungsflächen 12 und 26 erleichtert. Der Führungsteil 15 wird von der Feder in Richtung z2 relativ zu dem zweiten Teil 14 belastet.

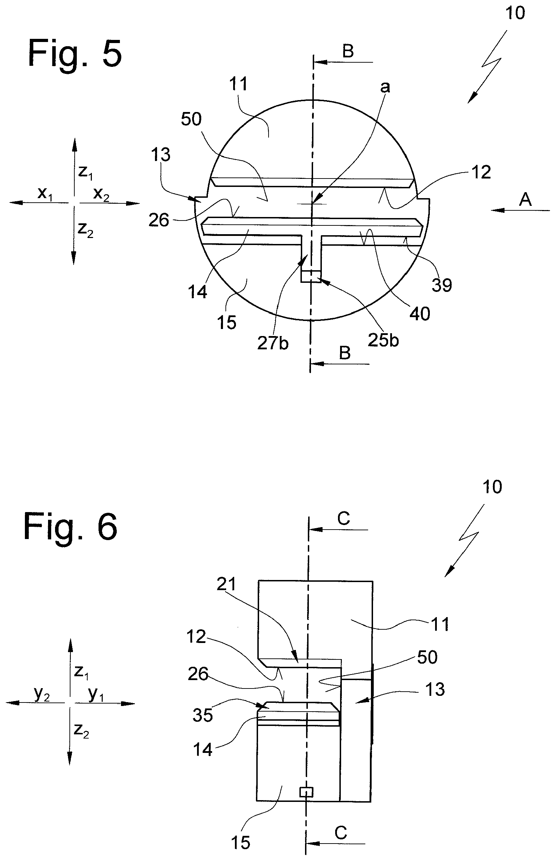

Wenn das zweite Teil 14 an dem Führungsteil 15 montiert ist (siehe z.B. die Fig. 5 bis 8) ist es möglich, das zweite Teil 14 relativ zu dem Führungsteil 15 entgegen der Kraft der Feder 29 in Richtung z2 zu bewegen, bis in einer zweiten Endposition eine Unterfläche 39 des zweiten Teils 14 mit einer Gegenfläche 40 des Führungsteils 15 in Kontakt gerät. In Richtung z1 ist, wie oben erwähnt, die Bewegung des zweiten Teils 14 durch den Kontakt der Hakenstrukturen 32 mit den Rückflächen 38 begrenzt. In diesem Bewegungsspielraum ist das zweite Teil 14 durch die zusammenwirkenden Führungsflächen der Führungsstifte 27a, 27b, 27c und 27d mit den Wänden der Aussparungen 25a, 25b, 25c und 25d verklemmungsfrei relativ zu dem Führungsteil 15 geführt und an dem Führungsteil 15 geführt.

Anschließend wird das Führungsteil 15 an dem ersten Teil 11 montiert (siehe Fig. 4), indem der Vorsprung 42 derart zwischen den an die Aussparung 47 angrenzenden Führungsschienen 18a und 18b angeordnet wird, dass die Führungsschienen 18a und 18b in die Führungsnuten 43a und 43b des Lagersitzes 17 eingreifen. Das Führungsteil 15 kann sich in dem Sitz 17 relativ zu dem ersten Teil 11 in die Richtungen z1 und z2 bewegen. In Richtung z1 ist eine Bewegung des Führungsteils 15 relativ zu dem ersten Teil 11 möglich, bis eine obere Fläche 48 des Vorsprungs 42 an einer die Aussparung 47 begrenzenden Fläche 49 anschlägt. In Richtung z2 ist die Bewegung des Führungsteils 15 relativ zu dem ersten Teil 11 von dem Kontakt der Anschlagfläche der Hakenstruktur 45 des Verriegelungselements 44 und der Rastschulter 24 des ersten Teils 11 begrenzt.

Das gesamte Gleitlager 10 kann dann mittels der Rastarme 19a und 19b in dem Lagersitz einer Vorrichtung, z.B. einem Ausstattungsteil, verrastet werden. Mittels der Öffnung 46 kann z.B. ein Steg des Schiebeteils zwischen der ersten Führungsfläche 12 und der zweiten Führungsfläche 26 angeordnet werden. Der Steg ist dann von dem Gleitlager 10 in die Richtungen x1 und x2 relativ zu dem Gleitlager 10 bewegbar geführt (siehe die Fig. 5 und 6). Eine Bewegung des Steges in Richtung y1 wird von der Seitenfläche 50 verhindert.

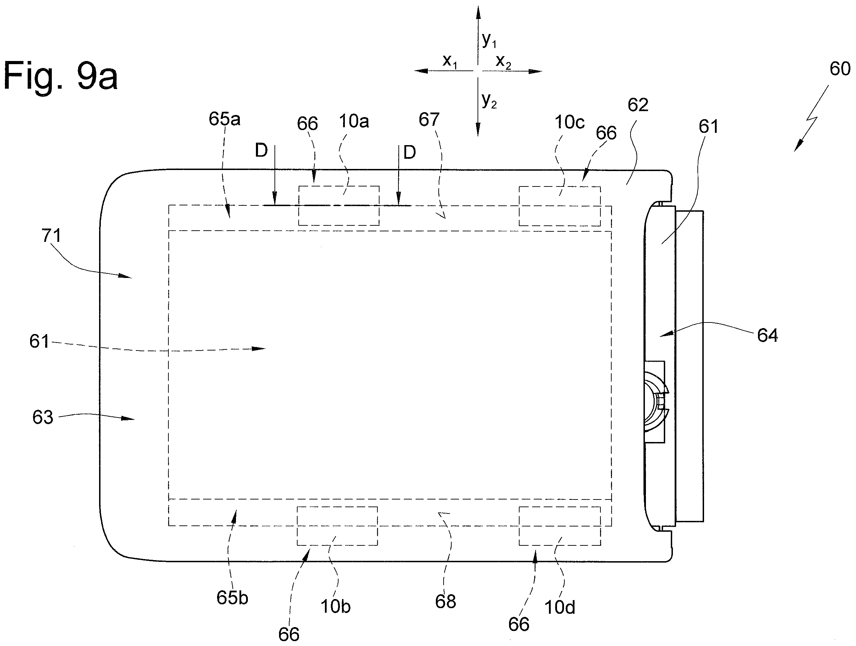

Ein Anwendungsbeispiel des Gleitlagers 10 ist in den Fig. 9a bis 11 dargestellt.

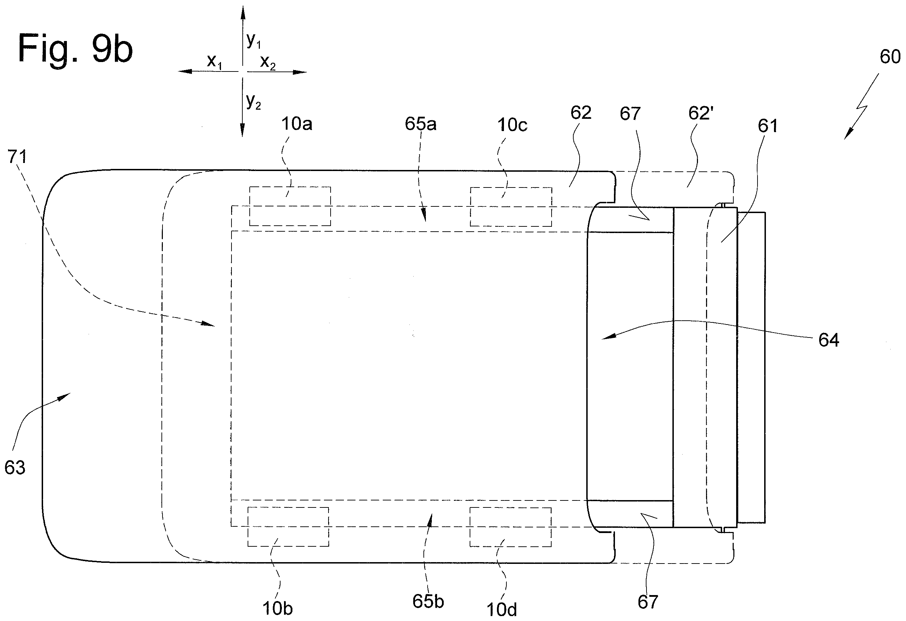

Fig. 9a zeigt ein Ausstattungsteil 60 für ein Fahrzeug, das im vorliegenden Beispiel von einer Armlehne gebildet ist. Das Ausstattungsteil 60 umfasst eine Basis 61 und ein in die Richtungen x1 und x2 relativ zu der Basis 61 verschiebbares Schiebeteil 62, das hier in Form einer Armauflage ausgebildet ist. Die Basis 61 ist in den Fig. 9a und 9b, wo sie von dem Schiebeteil verdeckt ist, gestrichelt dargestellt. Das Schiebeteil 62 weist einen vorderen Endbereich 63 und einen hinteren Endbereich 64 auf und ist an dem Basisteil 61 mittels einer Gleitlagervorrichtung 71 gleitgelagert.

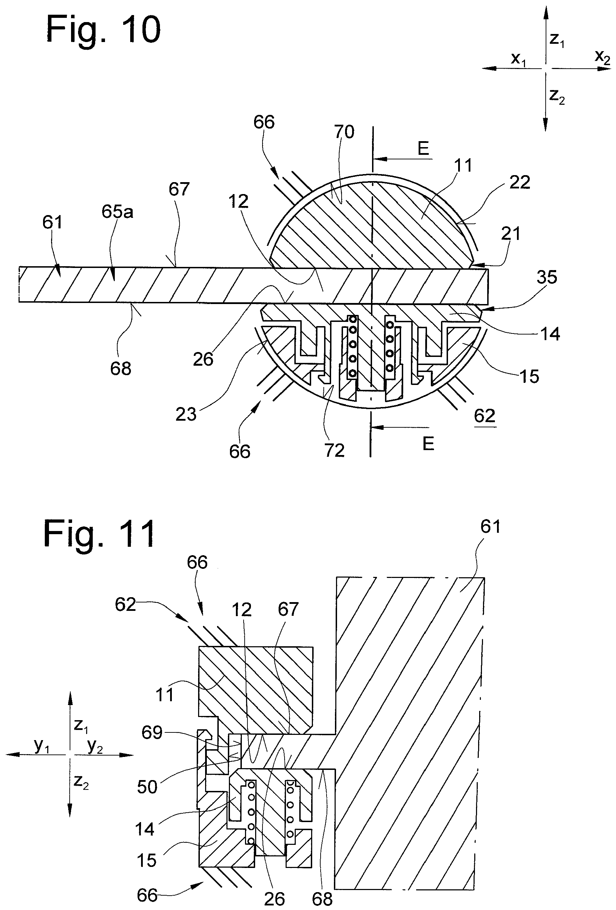

Zur Führung des Schiebeteils 62 weist die Basis 61 Stege 65a und 65b auf, wobei der Steg 65a in den erfindungsgemäßen Gleitlagern 10a und 10c und der Steg 65b in den Gleitlagern 10b und 10d in die Richtungen x1 und x2 verschiebbar zwischen einer ersten Position (siehe Fig. 9a) und einer zweiten Position (siehe Fig. 9b) gelagert ist. Die Stege 65a und 65b erstrecken sich wesentlich gradlinig parallel zu der Bewegungsrichtung des Schiebeteils 62. Die Gleitlager 10a, 10b, 10c und 10d sind in Lagersitzen 66 des Schiebeteils 62 (siehe Fig. 10) gehalten. Jedes Gleitlager 10a, 10b, 10c und 10d entspricht dem Gleitlager 10 des ersten Ausführungsbeispiels.

Das Gleitlager 10c ist ebenso wie das Lager 10a angeordnet. Die Gleitlager 10b und 10d sind spiegelverkehrt zu den Lagern 10a und 10c angeordnet, d.h. die Öffnungen 46 der Gleitlager 10a, 10b, 10c und 10d weisen zu dem Schiebeteil 62, sind aber ansonsten in gleicher Weise ausgebildet.

In den Fig. 10 und 11 ist das Gleitlager 10a mit dem Steg 65a in einer Schnittdarstellung gezeigt. Der Steg 65a umfasst eine erste Gleitfläche 67 und eine zweite Gleitfläche 68, die der ersten Gleitfläche 67 gegenüber liegt. Die Feder 29 spreizt das erste Teil 11 und das Führungsteil 15 in entgegengesetzte Richtungen. Von der Feder 29 wird das zweite Teil 14 in Richtung z1 belastet, wodurch die zweite Führungsfläche 26 an der zweiten Gleitfläche 68 anliegt und wobei der Steg 65a derart in Richtung z1 belastet wird, dass auch die erste Gleitfläche 67 an der ersten Führungsfläche 12 gehalten wird. Die erste Führungsfläche 12 wird in Richtung z1 gegen einen ersten Flächenbereich 70 des Lagersitzes 66 belastet. Zugleich belastet die Feder 29 das Führungsteil 15 in Richtung z2 gegen einen zweiten Flächenbereich 72 des Lagersitzes 66, welcher dem ersten Wandbereich 70 gegenüber liegt. Der Steg 65a ist mit dem erfindungsgemäßen Gleitelement 10a spielfrei gelagert. Das gesamte Gleitlager 10 ist zusätzlich spielfrei in dem Lagersitz 66 aufgenommen.

Fig. 11 zeigt, dass auch eine seitliche Bewegung des Schiebeteils 62 in die Richtung y2 mittels der Gleitlagers 10a und 10c begrenzt wird, indem eine Stirnfläche 69 des Steges 65a von der Seitenfläche 50 des ersten Teils 14 geführt wird. In gleicher Weise wird eine seitliche Bewegung in Richtung y1 von den Gleitlagern 10b und 10d begrenzt. Die gegenüberliegenden Gleitlager 10a und 10c sowie 10b und 10d verhindern die Bewegung der Armauflage bezüglich der Richtungen z1 und z2 sowie bezüglich der Richtung y1 und y2 und erlauben eine spielfreie Bewegung der Armauflage 62 in die Richtungen x1 und x2.

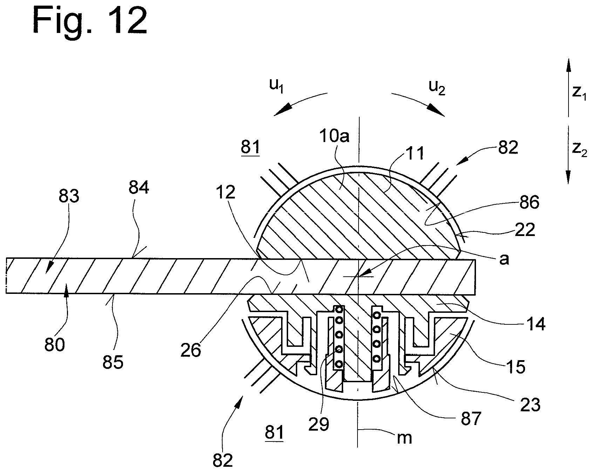

Fig. 12 zeigt eine Ausstattungsvorrichtung mit Lageranordnung welche dem Ausführungsbeispiel der Fig. 10 und 11 entspricht mit der Ausnahme, dass die Lager 10a, 10b, 10c und 10d, von denen hier lediglich das Lager 10a dargestellt ist, drehbar in ihrem Lagersitz angeordnet sind. Die Ausstattungsvorrichtung umfasst eine Basis 80 und ein relativ zu der Basis 80 verschiebbares Schiebeteil 81. Das Schiebeteil 81 bildet mehrere Lagersitze 82 aus, von denen hier lediglich ein Lagersitz 82 dargestellt ist. In dem Lagersitz 82, wie auch in den übrigen Lagersitzen, ist ein erfindungsgemäßes Lager 10a angeordnet, welches dem Lager 10 des ersten Ausführungsbeispiel gemäß der Fig. 1 bis 9b entspricht. Auch die Lager 10b, 10c und 10d sind in gleicher Weise ausgebildet.

An der Basis 80 sind Führungsstege 83 angeordnet, von denen hier lediglich ein Führungssteg 83 dargestellt ist. Der Führungssteg 83 wirkt mit dem Lager 10a zusammen, derart, dass eine erste Gleitfläche 84 des Führungsstegs 83 mit einer ersten Führungsfläche 12 des Lagers 10 und eine zweite Gleitfläche 85 des Führungsstegs 83 mit einer zweiten Führungsfläche 26 des Lagers 10 zusammenwirkt. Das Lager 10a ist derart ausgebildet, dass es um einen Mittelpunkt a in die Richtungen u1 und u2 drehbeweglich in dem Lagersitz 82 des Schiebeteils 81 aufgenommen ist. Dazu weist das Gleitlager 10a die um den Mittelpunkt a kreiszylindrisch ausgebildeten Außenflächenbereiche 22 des ersten Teils 11 und 23 des Führungsteils 15 auf, wobei der Außenflächenbereich 22 mit einem komplementären Flächenbereich 86 und der Außenflächenbereich 23 mit einem komplementären Flächenbereich 87 des Lagersitzes 82 zusammenwirkt. Das Gleitlager 10 verhindert in gleicher Weise wie bei dem Ausführungsbeispiel der Fig. 10 und 11 ein Spiel zwischen den Führungsflächen 12 und 26 und dem Führungssteg 83. Mittels der Feder 29, welche das erste Teil 11 in Richtung z1 und das Führungsteil 15 in Richtung z2 derart spreizt, dass der Außenflächenbereich 22 in Kontakt mit dem Flächenbereich 86 des Lagersitzes 82 und der Außenflächenbereich 23 in Kontakt mit dem Flächenbereich 87 des Lagersitzes belastet wird, wird ein Spiel zwischen dem Gleitlager 10a und dem Lagersitz 82 verhindert.

## Patentansprüche

1. Gleitlager (10) zur Führung eines translatorisch bewegbaren Schiebeteils mit einem ersten Teil (11) mit einer ersten Führungsfläche (12), die geeignet ist, mit einer ersten Gleitfläche (67) zusammenzuwirken und mit einem zweiten Teil (14) mit einer zweiten Führungsfläche (26), die geeignet ist, mit der zweiten Gleitfläche (68) zusammenzuwirken, wobei das zweite Teil (14) relativ zu dem ersten Teil (11) bewegbar ausgebildet ist und von einer Andruckvorrichtung (29) derart in Richtung der ersten Führungsfläche (12) gepresst wird, dass die erste Führungsfläche (12) mit der ersten Gleitfläche (67) und die zweite Führungsfläche (26) mit der zweiten Gleitfläche (68) in Kontakt bewegbar ist, **dadurch gekennzeichnet dass** ein Führungsteil (15) bewegbar mit dem ersten Teil (11) verbunden ist, wobei die Andruckvorrichtung derart angeordnet ist, dass Lagerflächen des Führungsteils (15) und Lagerflächen des ersten Teils (11) gegen Wandbereiche eines Lagersitzes belastbar sind.

2. Gleitlager nach Anspruch 1, **dadurch gekennzeichnet, dass** wenigstens eine Führungsfläche (12, 26) zur Führung einer Gleitfläche (67, 68) eben oder gebogen ausgebildet ist.

3. Gleitlager nach Anspruch 1 oder Anspruch 2, **dadurch gekennzeichnet, dass** die erste Führungsfläche (12) und die zweite Führungsfläche (26) parallel zueinander ausgebildet sind.

4. Gleitlager nach einem der vorangehenden Ansprüche, **dadurch gekennzeichnet, dass** das zweite Teil (14) und das erste Teil (11) derart aneinander gelagert sind, dass das zweite Teil (14) relativ zu dem ersten Teil (11) bewegbar ist.

5. Gleitlager nach einem der vorangehenden Ansprüche, **dadurch gekennzeichnet, dass** das erste Teil (11) mit einem Führungsteil (15) verbunden ist.

6. Gleitlager nach einem der vorangehenden Ansprüche, **dadurch gekennzeichnet, dass** das Führungsteil (15) in die erste Richtung (z1) und die zweite Richtung (z2) bewegbar mit dem ersten Teil (11) verbunden ist.

7. Gleitlager nach einem der vorangehenden Ansprüche, **dadurch gekennzeichnet, dass** das erste Teil (11) oder das gesonderte Führungsteil (15) erste Führungsmittel (25a, 25b, 25c, 25d) und das zweite Teil (14) zweite Führungsmittel (27a, 27b, 27c, 27d) zur Führung der Bewegung des zweiten Teils (14) relativ zu dem ersten Teil (11) aufweisen.

8. Gleitlager nach einem der vorangehenden Ansprüche, **dadurch gekennzeichnet, dass** das erste Teil (11) oder das gesonderte Führungsteil (15) erste Begrenzungsmittel (30a, 30b) und das zweite Teil (14) zweite Begrenzungsmittel zur Bewegungsbegrenzung der Relativbewegung zwischen dem ersten Teil (11) und dem zweiten Teil (14) umfasst.

9. Gleitlager nach einem der vorangehenden Ansprüche, **dadurch gekennzeichnet, dass** an dem ersten Teil (11) und oder an dem zweiten Teil (14) benachbart der Führungsfläche (12, 26) Fasen (21, 35) ausgebildet sind, welche die Montage zwischen den Führungsflächen (12, 26) erleichtern.

10. Gleitlager nach einem der vorangehenden Ansprüche, **dadurch gekennzeichnet, dass** wenigstens ein Bereich der Außenfläche des Gleitlagers (10) kreiszylindrisch oder kugelförmig ausgebildet ist.

11. Gleitlager nach einem der vorangehenden Ansprüche, **dadurch gekennzeichnet, dass** das Gleitlager (10) in Bewegungsrichtung (x1, x2) des Schiebeteils betrachtet eine etwa C-förmiges Gestalt aufweist mit einer Öffnung (46) zur Aufnahme der Gleitflächen (67, 68, 84, 85).

12. Ausstattungsvorrichtung umfassend eine Basis (61) und ein relativ zu der Basis (61) mittels einer Lagervorrichtung (71) translatorisch bewegbar gelagertes Schiebeteil (62), wobei die Lagervorrichtung (71) erste Führungsmittel aufweist, die der Basis (61) zugeordnet sind und zweite Führungsmittel aufweist, die dem Schiebeteil (62) zugeordnet sind, **dadurch gekennzeichnet, dass** die einen Führungsmittel von wenigstens einem Steg (65a, 65b) mit einer ersten Gleitfläche (67) und einer zweiten Gleietfläche (68) gebildet sind und dass die anderen Führungsmittel von einem in einem Lagersitz (66) fest oder bewegbar aufgenommenen Gleitlager (10) nach einem der Ansprüche 1 bis 11 gebildet ist.

13. Ausstattungsvorrichtung nach Anspruch 12, **dadurch gekennzeichnet, dass** das Gleitlager (10) in Drehrichtungen (u1, u2) drehbar in dem Lagersitz (66) aufgenommen ist.

14. Ausstattungsvorrichtung nach Anspruch 13, **dadurch gekennzeichnet, dass** eine Außenfläche (22, 23) des Gleitlagers (10) zumindest bereichsweise kreiszylindrisch oder kugelförmig und eine Lageraufnahme des Gleitlagers (10) zumindest bereichsweise komplementär zu der Außenfläche ausgebildet ist.

## Claims

1. Sliding bearing (10) for guiding a translationally moveable sliding part, having a first part (11) with a first guidance surface (12) suitable for interacting with a first sliding surface (67), and having a second part (14) with a second guidance surface (26) suitable for interacting with the second sliding surface (68), wherein the second part (14) is designed moveably relative to the first part (11), and is pressed in the direction of the first guidance surface (12) by a pressure device (29) in such a way that the first guidance surface (12) can be moved into contact with the first sliding surface (67) and the second guidance surface (26) can be moved into contact with the second sliding surface (68), **characterised in that** a guidance part (15) is moveably connected to the first part (11), wherein the pressure device is arranged such that bearing surfaces of the guidance part (15) and bearing surfaces of the first part (11) can be loaded against wall regions of a bearing seat.

2. Sliding bearing according to claim 1, **characterised in that** at least one guidance surface (12, 26) is designed to be flat or curved to guide a sliding surface (67, 68).

3. Sliding bearing according to claim 1 or claim 2,
**characterised in that** the first guidance surface (12) and the second guidance surface (26) are designed in parallel to each other.

4. Sliding bearing according to one of the preceding claims,
**characterised in that** the second part (14) and the first part (11) are mounted on each other such that the second part (14) can be moved relative to the first part (11).

5. Sliding bearing according to one of the preceding claims,
**characterised in that** the first part (11) is connected to a guidance part (15).

6. Sliding bearing according to one of the preceding claims,
**characterised in that** the guidance part (15) is moveably connected to the first part (11) in the first direction (z1) and the second direction (z2).

7. Sliding bearing according to one of the preceding claims,
**characterised in that** the first part (11) or the separate guidance part (15) has first guidance means (25a, 25b, 25c, 25d) and the second part (14) has second guidance means (27a, 27b, 27c, 27d) for guiding the movement of the second part (14) relative to the first part (11).

8. Sliding bearing according to one of the preceding claims,
**characterised in that** the first part (11) or the separate guidance part (15) comprises first limiting means (30a, 30b) and the second part (14) comprises second limiting means for movement limiting of the relative movement between the first part (11) and the second part (14).

9. Sliding bearing according to one of the preceding claims,
**characterised in that** chamfers (21, 35) are designed on the first part (11) and or on the second part (14) so as to be adjacent to the guidance surface (12, 26), said chamfers facilitating the mounting between the guidance surfaces (12, 26).

10. Sliding bearing according to one of the preceding claims,
**characterised in that** at least one region of the outer surface of the sliding bearing (10) is designed to be circular cylindrical or spherical.

11. Sliding bearing according to one of the preceding claims,
**characterised in that** the sliding bearing (10) has an approximately c-shaped form as seen in the movement direction (x1, x2) of the sliding part, having an opening (46) for receiving the sliding surfaces (67, 68, 84, 85).

12. Equipment device comprising a base (61) and a sliding part (62) mounted to be translationally moveable relative to the base (61) by means of a bearing device (71), wherein the bearing device (71) has first guidance means assigned to the base (61) and has second guidance means assigned to the sliding part (62), **characterised in that** the one guidance means are formed from at least one rod (65a, 65b) having a first sliding surface (67) and a second sliding surface (68), and **in that** the other guidance means is formed from a sliding bearing (10) according to one of claims 1 to 11 that is fixedly or moveably received in a bearing seat (66).

13. Equipment device according to claim 12, **characterised in that** the sliding bearing (10) is rotatably received in the bearing seat (66) in rotation directions (u1, u2).

14. Equipment device according to claim 13, **characterised in that** an outer surface (22, 23) of the sliding bearing (10) is designed to be at least partially circular cylindrical or spherical, and a bearing intake of the sliding bearing (10) is designed to be at least partially complementary to the outer surface.

## Revendications

1. Palier lisse (10) pour guider un élément coulissant mobile par translation, comprenant une première partie (11) qui présente une première surface de guidage (12) adaptée pour coopérer avec une première surface de glissement (67) et une seconde partie (14) qui présente une seconde surface de guidage (26) adaptée pour coopérer avec une seconde surface de glissement (68), dans lequel la seconde partie (14) est conçue de manière à être déplaçable par rapport à la première partie (11) et est pressée par un dispositif de pression (29) en direction de la première surface de guidage (12), dans lequel la première surface de guidage {12) peut être déplacée en contact avec la première surface de glissement (67) et la seconde surface de guidage (26) peut être déplacée en contact avec la seconde surface de glissement (68), **caractérisé en ce qu'**une partie de guidage (15) est reliée de façon mobile à la première partie (11), le dispositif de pression étant agencé de telle sorte que les surfaces de support de la partie de guidage (15) et les surfaces de support de la première partie (11) puissent être chargées contre des régions de paroi d'un siège de palier.

2. Palier lisse selon la revendication 1, **caractérisé en ce qu'**au moins une surface de guidage (12, 26) est plane ou courbe dans le but de guider une surface de glissement (67, 68).

3. Palier lisse selon la revendication 1 ou la revendication 2, **caractérisé en ce que** la première surface de guidage (12) et la seconde surface de guidage (26) sont formées parallèlement l'une à l'autre.

4. Palier lisse selon l'une quelconque des revendications précédentes, **caractérisé en ce que** la seconde partie (14) et la première partie (11) sont montées l'une contre l'autre de telle sorte que la seconde partie (14) puisse être déplacée par rapport à la première partie (11).

5. Palier lisse selon l'une quelconque des revendications précédentes, **caractérisé en ce que** la première partie (11) est reliée à une partie de guidage (15).

6. Palier lisse selon l'une quelconque des revendications précédentes, **caractérisé en ce que** la partie de guidage (15) est reliée à la première partie (11) de manière à pouvoir être déplacée dans la première direction (z1) et dans la seconde direction (z2).

7. Palier lisse selon l'une quelconque des revendications précédentes, **caractérisé en ce que** la première partie (11) ou la partie de guidage séparée (15) comprend des premiers moyens de guidage (25a, 25b, 25c, 25d) et la seconde partie (14) comprend des seconds moyens de guidage (27a, 27b, 27c, 27d) dans le but de guider le déplacement de la seconde partie (14) par rapport à la première partie (11).

8. Palier lisse selon l'une quelconque des revendications précédentes, **caractérisé en ce que** la première partie (11) ou la partie de guidage séparée (15) comprend des premiers moyens de limitation (30a, 30b) et la seconde partie (14) comprend des seconds moyens de limitation dans le but de limiter le déplacement relatif entre la première partie (11) et la seconde partie (14).

9. Palier lisse selon l'une quelconque des revendications précédentes, **caractérisé en ce que** des chanfreins (21, 35) sont prévus sur la première partie (11) et/ou sur la seconde partie (14) à proximité de la surface de guidage (12, 26) dans le but de faciliter le montage entre les surfaces de guidage (12, 26).

10. Palier lisse selon l'une quelconque des revendications précédentes, **caractérisé en ce qu'**au moins une région de la surface extérieure du palier lisse (10) est de forme cylindrique circulaire ou de forme sphérique.

11. Palier lisse selon l'une quelconque des revendications précédentes, **caractérisé en ce que** le palier lisse (10) présente, considéré dans le sens de déplacement (x1, x2) de la partie coulissante, une forme sensiblement en C comportant une ouverture (46) destinée à recevoir les surfaces de glissement (67, 68, 84, 85).

12. Dispositif d'équipement comprenant une base (61) et une partie coulissante (62) montée de façon mobile par translation par rapport à la base (61) par l'intermédiaire d'un dispositif formant palier (71), dans lequel le dispositif formant palier (71) comprend des premiers moyens de guidage, qui sont associés à la base (61), et des seconds moyens de guidage, qui sont associés à la partie coulissante (62), **caractérisé en ce que** lesdits premiers moyens de guidage sont constitués par au moins une entretoise (65a, 65b) qui présente une première surface de glissement (67) et une seconde surface de glissement (68), et **en ce que** lesdits autres moyens de guidage sont constitués par un palier lisse (10) selon l'une quelconque des revendications 1 à 11, qui est reçu de façon fixe ou mobile dans un siège de palier (66).

13. Dispositif d'équipement selon la revendication 12, **caractérisé en ce que** le palier lisse (10) est reçu dans le siège de palier (66) de manière à pouvoir tourner dans des sens de rotation (u1, u2).

14. Dispositif d'équipement selon la revendication 13, **caractérisé en ce qu'**une surface extérieure (22, 23) du palier lisse (10) est au moins dans certaines régions de forme cylindrique circulaire ou de forme sphérique, et un siège de palier du palier lisse (10) présente au moins dans certaines régions une forme complémentaire à celle de la surface extérieure.
